# FASCICULE DE BREVET EUROPEEN

(11) **EP 4 072 892 B1**
(45) Date de publication et mention de la délivrance du brevet: **12.03.2025**
(21) Numéro de dépôt: 20823903.8
(22) Date de dépôt: 17.11.2020
(51) Int. Cl.: B60K 35/00

(54) **DISPOSITIF DESTINÉ À LUTTER CONTRE LA CINÉTOSE INTÉGRÉ DANS UN VÉHICULE AUTOMOBILE**
IN EIN KRAFTFAHRZEUG INTEGRIERTE VORRICHTUNG GEGEN REISEKRANKHEIT
DEVICE FOR CONTROLLING MOTION SICKNESS, WHICH IS INTEGRATED INTO A MOTOR VEHICLE

(30) Priorité: 13.12.2019 FR 1914358
(43) Date de publication de la demande: 19.10.2022
(73) Titulaire: NOVARES France, 78140 Vélizy-Villacoublay (FR)
(72) Inventeur: BOLLIER, François, 06300 Nice (FR); CAZES, Christophe, 78000 Versailles (FR)
(74) Mandataire: Germain Maureau
(86) Numéro de dépôt international: PCT/FR2020/052097
(87) Numéro de publication internationale: WO 2021/116549

(56) Documents cités:
- DE-A1- 102006 009 566
- DE-A1- 102017 207 788
- US-A1- 2017 212 633
- US-A1- 2019 083 739
- "Accelerometer", 10 November 2019 (2019-11-10), XP002800053, Retrieved from the Internet <URL:https://en.wikipedia.org/w/index.php?title=Accelerometer&oldid=925500489> [retrieved on 20200817]

## Description

L'invention concerne un dispositif destiné à lutter contre la cinétose intégré dans un véhicule automobile et un véhicule automobile équipé dudit dispositif.

Un problème couramment rencontré par les personnes voyageant dans un véhicule, un avion ou un bateau est le mal des transports, également appelé cinétose. Le mal des transports est dû à un décalage entre les sensations ressenties dans le système vestibulaire de l'oreille interne et celles éprouvées par d'autres sens, telles que les perceptions visuelles d'une personne. Les récepteurs d'équilibre dans l'oreille interne sont sensibles à la gravité (par exemple, aux changements d'orientation), à la vitesse et aux changements de vitesse (accélérations) se produisant lors du déplacement du véhicule. Lorsque les sensations ressenties par l'oreille interne ne correspondent pas aux signaux visuels perçus par la personne, il en résulte souvent un mal des transports pour la personne, se traduisant notamment sous la forme de nausées et maux de tête.

Par exemple, un passager voyageant sur une route sinueuse dans une automobile subit des accélérations linéaires et angulaires à chaque fois que le véhicule se déplace dans une courbe. La réponse du système de détection vestibulaire à l'accélération provoquée par le mouvement du véhicule ne correspondra pas à la perception visuelle à moins que la personne ne regarde continuellement la route, de sorte que la perception de son oreille interne corresponde à la trajectoire du véhicule perçue visuellement dans les courbes. C'est pour cette raison que le conducteur d'un véhicule ne souffre généralement pas du mal des transports, alors que les passagers du véhicule peuvent en souffrir. En effet, le conducteur surveille en permanence la route et perçoit visuellement le mouvement du véhicule de sorte que les perceptions visuelles correspondent aux sens de l'oreille interne. A l'inverse, les passagers d'un véhicule qui lisent ou ne regardent que l'intérieur du véhicule ou qui exercent d'autres activités qui les empêchent de surveiller la route auront une perception visuelle qui ne correspond pas à celle de leur oreille interne.

Pour éviter le mal des transports, une solution consiste donc pour le passager à surveiller la route comme s'il conduisait le véhicule, de sorte que les informations visuelles qu'il reçoit correspondent davantage aux sensations de son système vestibulaire. Cependant, lorsqu'il est assis à l'arrière du véhicule, il voit généralement la route de manière partielle. Le mouvement réel du passager perçu par l'appareil auditif interne de l'oreille vestibulaire ne peut donc pas être facilement associé à la perception visuelle de ce mouvement. Le mal des transports ne peut donc pas être évité dans ce cas.

Une autre solution au mal des transports, décrite dans le document US 2019/0083739, consiste à utiliser des repères lumineux dans les montants intérieurs d'un habitacle de véhicule, lesdits repères lumineux formant des colonnes lumineuses de chaque côté de l'habitacle. La hauteur des colonnes lumineuses est contrôlée par des moyens de commande électroniques de manière à créer un horizon artificiel correspondant à la perception de l'oreille interne d'un passager assis dans le véhicule. Cette solution présente toutefois l'inconvénient de définir un horizon artificiel qui ne tient pas compte de la taille des passagers et de leur position dans l'habitacle. Ainsi, dans cette solution connue, un enfant en bas âge pourra avoir des difficultés à voir l'horizon artificiel si ce dernier est positionné au-dessus de ses yeux. De la même façon, une personne de grande taille pourra difficilement voir l'horizon artificiel si ses yeux se trouvent au-dessus des repères lumineux les plus hauts des colonnes lumineuses. Par ailleurs, cette solution connue ne permet de créer qu'un seul horizon artificiel dans l'habitacle. Or, dans le cas où deux personnes de tailles différentes sont assises côte à côte à l'arrière du véhicule, il serait souhaitable de définir deux horizons artificiels à deux hauteurs différentes, chacun des horizons artificiels étant affecté spécifiquement à l'une des personnes. D'autres solutions connues au mal des transports ont été décrites dans les documents DE 10 2007 207 788 A et DE 10 2006 009 566 A. Dans ces solutions, une unité de contrôle est apte à recevoir des signaux émis par des capteurs et à piloter des moyens d'affichage pour former une ou plusieurs lignes d'horizon artificielle. Ces solutions présentent toutefois l'inconvénient de ne pas permettre une détection suffisamment fiable de l'orientation du véhicule. Il est par ailleurs connu, du document wikipedia « Accelerometer », qu'un accéléromètre triaxial peut servir à détecter les changements d'orientation d'un véhicule.

L'invention vise donc à proposer un dispositif destiné à lutter contre la cinétose intégré dans un véhicule automobile et ne présentant pas les inconvénients de l'art antérieur susmentionné.

A cet effet, l'invention concerne un dispositif anti-cinétose équipant un véhicule automobile, le dispositif anti-cinétose comprenant :
- un accéléromètre triaxial configuré pour détecter les accélérations du véhicule selon 3 axes et à émettre un signal d'accélération correspondant ;
- des moyens d'affichage de repères lumineux aptes à former au moins une première ligne d'horizon artificiel au niveau d'une première surface intérieure du véhicule automobile et au moins une deuxième ligne d'horizon artificiel au niveau d'une deuxième surface intérieure du véhicule automobile, les dites première et deuxième lignes d'horizon artificiel étant perpendiculaires ou sensiblement perpendiculaires l'une à l'autre ;
- une unité de contrôle apte à recevoir les signaux d'accélération émis par l'accéléromètre et à piloter lesdits moyens d'affichage de telle sorte que les première et deuxième lignes d'horizon artificiel soient alignées dans un plan horizontal, perpendiculaire ou sensiblement perpendiculaire au vecteur gravitation, quelles que soient les accélérations du véhicule, la position dudit plan horizontal le long d'une direction parallèle au vecteur gravitation pouvant varier en fonction d'un paramètre physique lié à la personne assise dans le véhicule automobile en étant positionnée juste à côté de la première surface intérieure et juste en face de la deuxième surface intérieure, dans lequel les moyens d'affichage sont aptes à émettre au moins deux faisceaux lumineux de forme rectiligne, respectivement un premier faisceau lumineux projeté sur la première surface intérieure et formant la première ligne d'horizon artificiel, et un deuxième faisceau lumineux projeté sur la deuxième surface intérieure et formant la deuxième ligne d'horizon artificiel, et dans lequel les moyens d'affichage comprennent au moins une source lumineuse émettant un faisceau lumineux principal, et des moyens de séparation et de déviation dudit faisceau lumineux principal en deux faisceaux lumineux secondaires.

Ainsi configuré, le dispositif anti-cinétose de l'invention permet de supprimer le mal des transports en affichant deux lignes d'horizon artificiel, respectivement l'une en face d'une personne assise dans le véhicule et l'autre à côté de ladite personne, lesdites lignes étant alignées dans un plan horizontal. Le dispositif permet en outre de faire varier la hauteur des lignes en fonction d'un paramètre physique lié à la personne.

Le dispositif de l'invention pourra également comprendre une ou plusieurs des caractéristiques suivantes :
- le paramètre physique est la taille de la personne, en position assise dans le véhicule.
- l'unité de contrôle est apte à modifier la position du plan horizontal défini par les première et deuxième lignes d'horizon artificiel en réponse à une commande saisie manuellement par l'un des occupants du véhicule au moyen d'une interface de commande.
- l'interface de commande est intégrée dans le tableau de bord du véhicule.
- l'interface de commande est intégrée dans un montant central du véhicule.
- l'interface de commande comprend une surface externe fonctionnellement liée à des moyens de détection de type capacitif, lesdits moyens de détection étant aptes à détecter le contact d'un doigt sur ladite surface externe et à transmettre un signal correspondant à l'unité de contrôle.
- l'unité de contrôle est apte à modifier de manière automatique la position du plan horizontal défini par les première et deuxième lignes d'horizon artificiel en réponse à un signal émis par un capteur configuré pour détecter au moins un paramètre physique, en particulier la position des yeux, de la personne assise juste à côté de la première surface intérieure et juste en face de la deuxième surface intérieure.
- le capteur est choisi parmi une caméra, un capteur ultrason, un capteur radiofréquence et un capteur de mesure du poids positionné dans l'un des sièges du véhicule.
- les moyens de séparation et de déviation comprennent un prisme destiné à séparer le faisceau lumineux en deux faisceaux lumineux secondaires et une combinaison de miroirs et/ou de lentilles destinée à modifier la trajectoire desdits faisceaux lumineux secondaires.
- la source lumineuse est un laser.

L'invention concerne également un véhicule automobile équipé du dispositif anti-cinétose tel que défini précédemment.

Dans une configuration particulière de l'invention, le véhicule comprend au moins un montant central, ledit montant central supportant les moyens d'affichage, lesdits moyens d'affichage étant configurés pour projeter le premier faisceau lumineux sur une vitre latérale arrière ou un panneau de porte arrière du véhicule et pour projeter le deuxième faisceau lumineux sur une surface intérieure de l'habitacle disposée de manière sensiblement perpendiculaire à ladite vitre ou audit panneau de porte, par exemple le dossier d'un des sièges avant du véhicule.

Dans une autre configuration particulière de l'invention, les moyens d'affichage sont déplaçables le long du montant central de manière à permettre un réglage de la hauteur des lignes d'horizon artificiel par rapport à un plan fixe horizontal.

L'invention concerne également un procédé d'affichage de repères lumineux destinés à lutter contre la cinétose, comprenant les étapes suivantes :
- détection des accélérations d'un véhicule automobile selon 3 axes et envoi de signaux correspondants à une unité de contrôle ;
- détection d'un paramètre physique lié à la personne assise dans le véhicule automobile et envoi d'un signal correspondant à l'unité de contrôle ;
- pilotage par l'unité de contrôle de moyens d'affichage de repères lumineux aptes à former au moins une première ligne d'horizon artificiel au niveau d'une première surface intérieure du véhicule automobile et au moins une deuxième ligne d'horizon artificiel au niveau d'une deuxième surface intérieure du véhicule automobile, les dites première et deuxième lignes d'horizon artificiel étant perpendiculaires ou sensiblement perpendiculaires l'une à l'autre, de telle sorte que les première et deuxième lignes d'horizon artificiel soient alignées dans un plan horizontal, perpendiculaire au vecteur gravitation, quelles que soient les accélérations du véhicule, la position dudit plan horizontal le long d'une direction parallèle au vecteur gravitation pouvant varier en fonction du paramètre physique détecté, dans lequel les moyens d'affichage sont aptes à émettre au moins deux faisceaux lumineux de forme rectiligne, respectivement un premier faisceau lumineux projeté sur la première surface intérieure et formant la première ligne d'horizon artificiel, et un deuxième faisceau lumineux projeté sur la deuxième surface intérieure et formant la deuxième ligne d'horizon artificiel, et dans lequel les moyens d'affichage comprennent au moins une source lumineuse émettant un faisceau lumineux principal, et des moyens de séparation et de déviation dudit faisceau lumineux principal en deux faisceaux lumineux secondaires.

D'autres caractéristiques et avantages ressortiront clairement de la description ci-après de deux modes particuliers de réalisation de l'invention, donnés à titre d'exemples non limitatifs, en référence aux dessins annexés dans lesquels :
[Fig. 1] est une vue en perspective depuis l'arrière de l'habitacle d'un véhicule selon un premier mode de réalisation de l'invention et selon un premier mode de fonctionnement du dispositif anti-cinétose, le véhicule n'étant soumis à aucune accélération ;
[Fig. 1a] est une vue arrière du véhicule représenté sur la fig. 1 ;
[Fig. 1b] est une vue latérale du véhicule représenté sur la fig. 1 ;
[Fig. 2] est une vue similaire à la fig. 1, dans un deuxième mode de fonctionnement du dispositif anti-cinétose ;
[Fig. 2a] est une vue similaire à la fig. 2, dans laquelle un premier exemple d'interface de commande est représenté ;
[Fig. 2b] est une vue similaire à la fig. 2, dans laquelle un deuxième exemple d'interface de commande est représenté ;
[Fig. 2c] est une vue en perspective depuis l'avant de l'habitacle du véhicule représenté sur la fig. 1, dans laquelle un exemple de capteur est représenté ;
[Fig. 3] est une vue similaire à la fig. 1, le véhicule étant soumis à une accélération selon l'axe Y ;
[Fig. 3a] est une vue arrière du véhicule représenté sur la fig. 3 ;
[Fig. 3b] est une vue latérale du véhicule représenté sur la fig. 3 ;
[Fig. 4] est une vue similaire à la fig. 1, le véhicule étant soumis à une accélération selon l'axe X ;
[Fig. 4a] est une vue arrière du véhicule représenté sur la fig. 4 ;
[Fig. 4b] est une vue latérale du véhicule représenté sur la fig. 4 ;
[Fig. 5] est une vue similaire à la fig. 1, le véhicule étant soumis à une accélération selon l'axe X et selon l'axe Y ;
[Fig. 5a] est une vue arrière du véhicule représenté sur la fig. 5 ;
[Fig. 5b] est une vue latérale du véhicule représenté sur la fig. 5 ;
[Fig. 6] est une vue similaire à la fig. 1, le véhicule étant soumis à une accélération selon l'axe Y ;
[Fig. 6a] est une vue arrière du véhicule représenté sur la fig. 6 ;
[Fig. 6b] est une vue latérale du véhicule représenté sur la fig. 6 ;
[Fig. 7] est une vue en perspective de l'habitacle d'un véhicule selon un deuxième mode de réalisation de l'invention, le véhicule n'étant soumis à aucune accélération ;
[Fig. 7a] est une vue arrière du véhicule représenté sur la fig. 7 ;
[Fig. 7b] est une vue latérale du véhicule représenté sur la fig. 7 ;
[Fig. 8] est une vue similaire à la fig. 7, le véhicule étant soumis à une accélération selon l'axe Y ;
[Fig. 8a] est une vue arrière du véhicule représenté sur la fig. 8 ;
[Fig. 8b] est une vue latérale du véhicule représenté sur la fig. 8 ;
[Fig. 9] est une vue similaire à la fig. 7, le véhicule étant soumis à une accélération selon l'axe X ;
[Fig. 9a] est une vue arrière du véhicule représenté sur la fig. 9 ;
[Fig. 9b] est une vue latérale du véhicule représenté sur la fig. 9 ;
[Fig. 10] est une vue similaire à la fig. 7, le véhicule étant soumis à une accélération selon l'axe X et selon l'axe Y ;
[Fig. 10a] est une vue arrière du véhicule représenté sur la fig. 10 ;
[Fig. 10b] est une vue latérale du véhicule représenté sur la fig. 10 ;
[Fig. 11] est une vue similaire à la fig. 7, le véhicule étant soumis à une accélération selon l'axe Y;
[Fig. 11a] est une vue arrière du véhicule représenté sur la fig. 11 ;
[Fig. 11b] est une vue latérale du véhicule représenté sur la fig. 11.

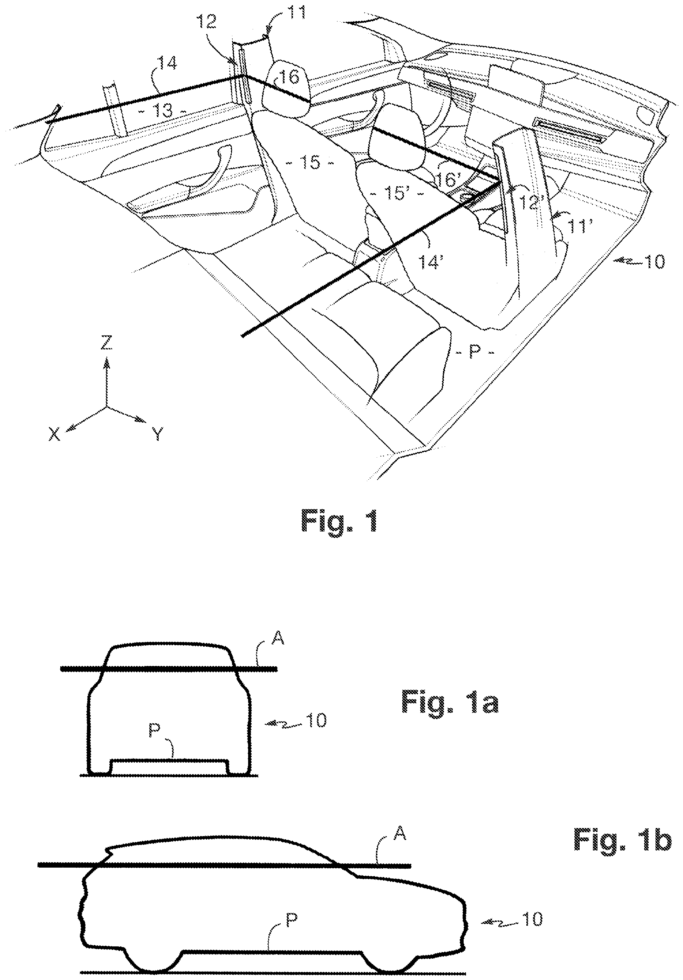

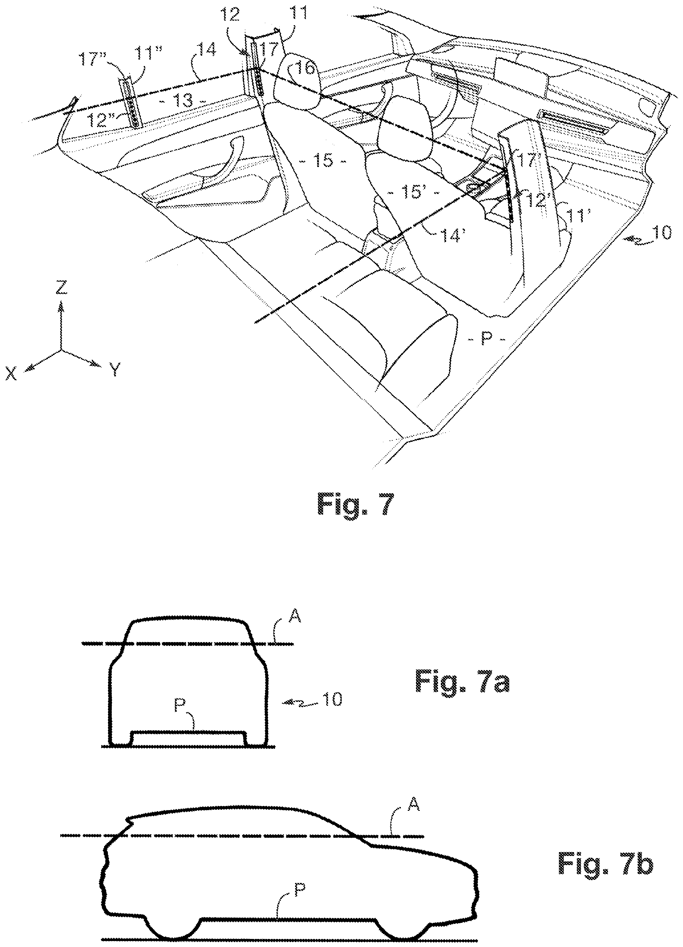

Dans la suite de cette description, et en référence au repère cartésien XYZ représenté sur les figs 1 et 7, il sera utilisé les termes de « direction longitudinale » pour une direction selon l'axe X, de « direction transversale » pour une direction selon l'axe Y et de « direction verticale » pour une direction selon l'axe Z. Par ailleurs, par convention, le terme « avant » sera utilisé pour indiquer une orientation dirigée vers l'avant du véhicule et le terme « arrière » sera utilisé pour indiquer une orientation dirigée vers l'arrière du véhicule.

En référence à la fig. 1, il est représenté un habitacle d'un véhicule 10 selon un premier mode de réalisation de l'invention. Dans ce mode de réalisation, une première colonne d'éclairage 12 orientée verticalement est supportée par un montant central 11 du véhicule et est disposée du côté gauche par rapport au champ de vision d'un passager assis à l'arrière du véhicule, et une deuxième colonne d'éclairage 12' orientée verticalement est supportée par un autre montant central 11' du véhicule et est disposée du côté droit par rapport au champ de vision d'un passager assis à l'arrière du véhicule. Chaque colonne d'éclairage 12, 12' comprend au moins une source lumineuse configurée pour projeter un premier faisceau lumineux rectiligne sur une vitre latérale arrière ou un panneau de porte arrière 13 du véhicule et pour projeter un deuxième faisceau lumineux rectiligne sur le dossier d'un des sièges avant 15 ou 15' du véhicule. Le premier faisceau lumineux émis par la première colonne d'éclairage 12 se projette sur la vitre latérale arrière ou le panneau de porte arrière 13 directement adjacent à la première colonne d'éclairage 12 selon une première ligne 14, référencée par la suite en tant que première ligne d'horizon artificiel, et le deuxième faisceau lumineux émis par la première colonne d'éclairage 12 se projette sur le dossier du siège avant 15 directement adjacent à la première colonne d'éclairage 12 selon une deuxième ligne 16, référencée par la suite en tant que deuxième ligne d'horizon artificiel. De manière similaire, le premier faisceau lumineux émis par la deuxième colonne d'éclairage 12' se projette sur la vitre latérale arrière ou le panneau de porte arrière (non représenté) directement adjacent à la deuxième colonne d'éclairage 12' selon une première ligne 14', référencée par la suite en tant que première ligne d'horizon artificiel, et le deuxième faisceau lumineux émis par la deuxième colonne d'éclairage 12' se projette sur le dossier du siège avant 15' directement adjacent à la deuxième colonne d'éclairage 12' selon une deuxième ligne 16', référencée par la suite en tant que deuxième ligne d'horizon artificiel. Dans cette configuration, les première et deuxième lignes d'horizon artificiel sont perpendiculaires ou sensiblement perpendiculaires l'une à l'autre.

En pilotant de manière adaptée la ou les sources lumineuses, il est ainsi possible d'aligner les première et deuxième lignes d'horizon artificiel 14, 16 et 14', 16' dans un plan horizontal A qui est toujours perpendiculaire au vecteur gravitation. Ainsi, une personne assise à côté de la vitre latérale arrière 13 et derrière le siège avant 15 et fixant lesdites lignes d'horizon artificiel 14, 16 aura les mêmes sensations visuelles que le conducteur regardant la route : il ne sera donc plus soumis au mal des transports. Pour aboutir à ce résultat, le véhicule 10 est avantageusement équipé d'un accéléromètre triaxial configuré pour détecter les accélérations du véhicule selon les 3 axes X, Y et Z et émettre des signaux d'accélération correspondants, et d'une unité de contrôle apte à recevoir les signaux d'accélération émis par l'accéléromètre et à piloter la ou les sources lumineuses de telle sorte que les première et deuxième lignes d'horizon artificiel 14, 16 et 14', 16' soient alignées dans un plan horizontal A, perpendiculaire au vecteur gravitation, quelles que soient les accélérations du véhicule.

Les figs 1, 1a, 1b, 3 à 6, 3a à 6a et 3b à 6b illustrent plusieurs conditions de conduite possibles et le fonctionnement correspondant du dispositif anti-cinétose équipant le véhicule de l'invention.

Ainsi, dans le cas où le véhicule 10 circule sur une route plane, comme représenté sur les figs 1a et 1b, il n'est soumis en principe à aucune accélération. Dans ce cas, le plan A défini par les lignes d'horizon artificiel 14, 16 et 14', 16' est parallèle au plancher P du véhicule.

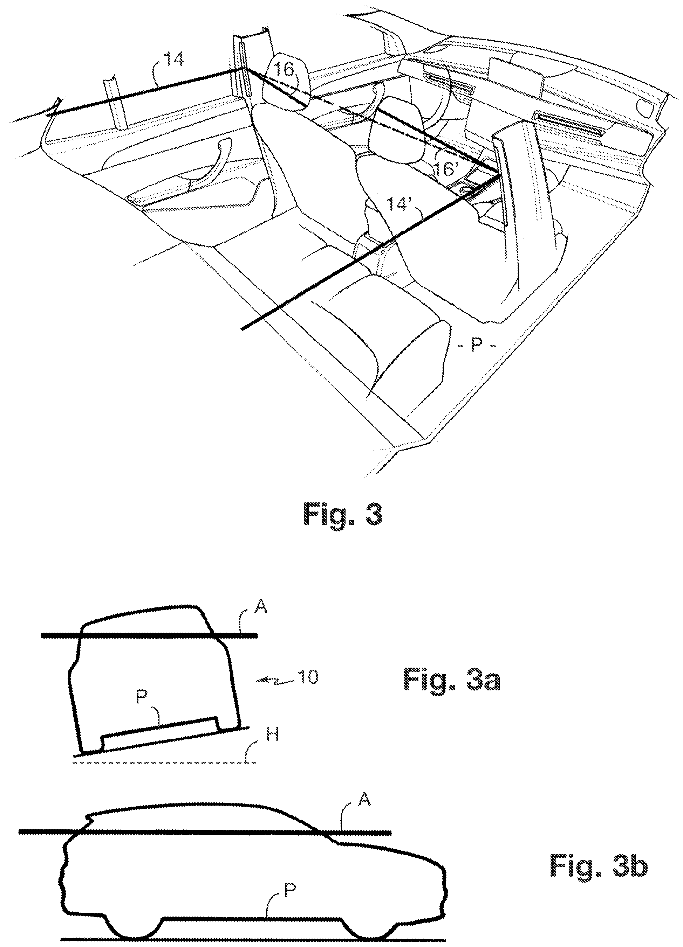

Dans le cas où le véhicule 10 circule sur une route inclinée sur la gauche par rapport à un plan horizontal fixe H, perpendiculaire au vecteur gravitation, comme représenté sur les figs 3a et 3b, il est soumis à une accélération selon l'axe Y. Cette accélération est détectée par l'accéléromètre triaxial, lequel envoie un signal d'accélération correspondant à l'unité de contrôle. En réponse à ce signal d'accélération, l'unité de contrôle commande les sources lumineuses correspondantes des première et deuxième colonnes d'éclairage 12, 12' de manière à aligner les faisceaux lumineux émis par lesdites sources lumineuses avec le plan horizontal fixe H. Dans ce cas, le plan A défini par les lignes d'horizon artificiel 14, 16 et 14', 16' est incliné par rapport au plancher P du véhicule au niveau de l'axe Y, comme représenté sur la fig. 3.

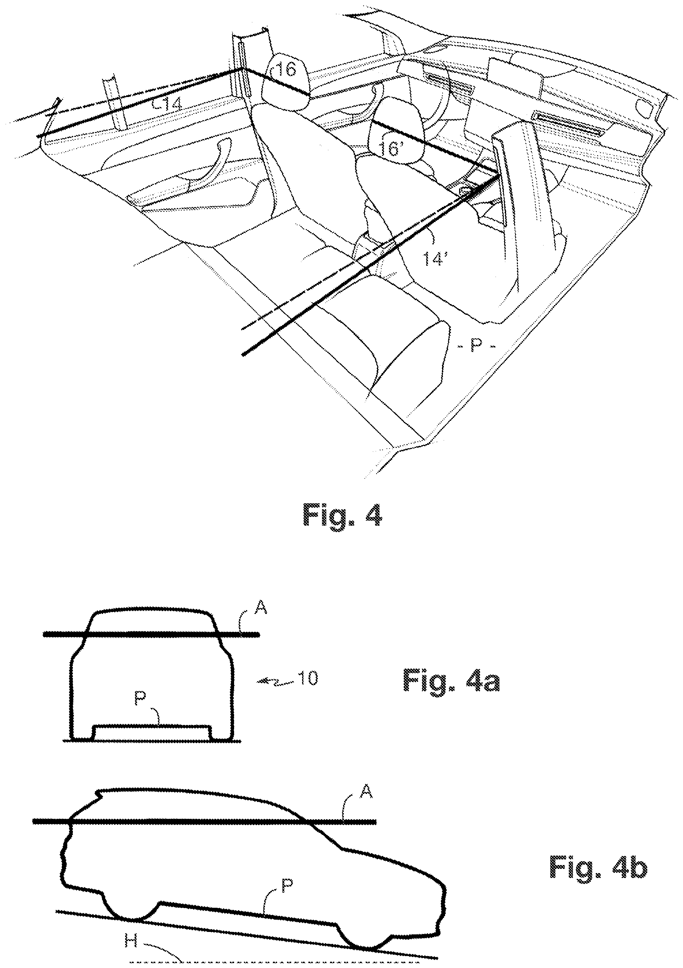

Dans le cas où le véhicule 10 circule sur une route inclinée vers le bas par rapport à un plan horizontal fixe H, perpendiculaire au vecteur gravitation, comme représenté sur les figs 4a et 4b, il est soumis à une accélération selon l'axe X. Cette accélération est détectée par l'accéléromètre triaxial, lequel envoie un signal d'accélération correspondant à l'unité de contrôle. En réponse à ce signal d'accélération, l'unité de contrôle commande les sources lumineuses correspondantes des première et deuxième colonnes d'éclairage 12, 12' de manière à aligner les faisceaux lumineux émis par lesdites sources lumineuses avec le plan horizontal fixe H. Dans ce cas, le plan A défini par les lignes d'horizon artificiel 14, 16 et 14', 16' est incliné par rapport au plancher P du véhicule au niveau de l'axe X, comme représenté sur la fig. 4.

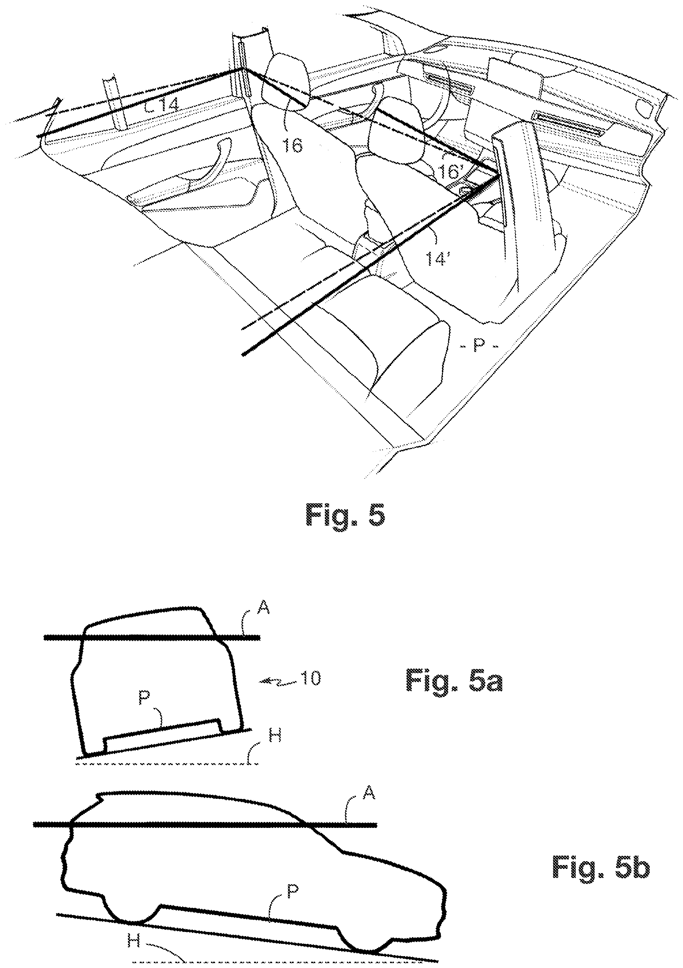

Dans le cas où le véhicule 10 circule sur une route inclinée sur la gauche et vers le bas par rapport à un plan horizontal fixe H, perpendiculaire au vecteur gravitation, comme représenté sur les figs 5a et 5b, il est soumis à une accélération selon l'axe X et selon l'axe Y. Cette accélération est détectée par l'accéléromètre triaxial, lequel envoie un signal d'accélération correspondant à l'unité de contrôle. En réponse à ce signal d'accélération, l'unité de contrôle commande les sources lumineuses correspondantes des première et deuxième colonnes d'éclairage 12, 12' de manière à aligner les faisceaux lumineux émis par lesdites sources lumineuses avec le plan horizontal fixe H. Dans ce cas, le plan A défini par les lignes d'horizon artificiel 14, 16 et 14', 16' est incliné par rapport au plancher P du véhicule au niveau des axes X et Y, comme représenté sur la fig. 5.

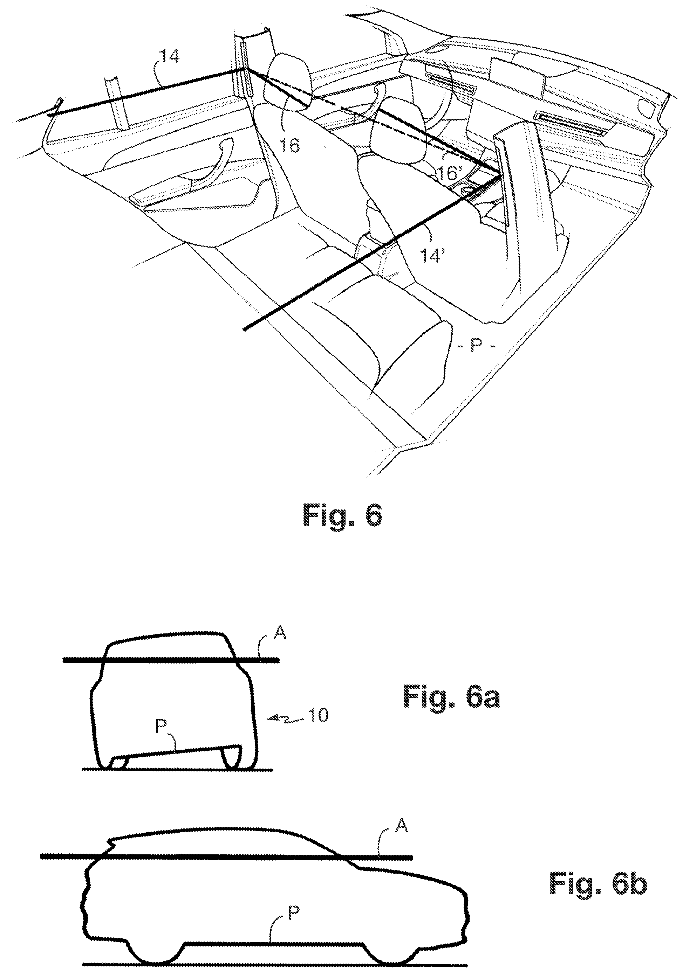

Dans le cas où le véhicule 10 circule sur une route plane et effectue un virage à gauche, comme représenté sur les figs 6a et 6b, il est soumis à une accélération selon l'axe Y. Cette accélération est détectée par l'accéléromètre triaxial, lequel envoie un signal d'accélération correspondant à l'unité de contrôle. En réponse à ce signal d'accélération, l'unité de contrôle commande les sources lumineuses correspondantes des première et deuxième colonnes d'éclairage 12, 12' de manière à aligner les faisceaux lumineux émis par lesdites sources lumineuses avec le plan horizontal fixe H. Dans ce cas, le plan A défini par les lignes d'horizon artificiel 14, 16 et 14', 16' est incliné par rapport au plancher P du véhicule au niveau de l'axe Y, comme représenté sur la fig. 6.

Les faisceaux lumineux de chacune des colonnes d'éclairage 12, 12' pourront être générés par deux sources lumineuses distinctes, ou par une unique source lumineuse unique émettant un faisceau lumineux principal, ledit faisceau lumineux principal étant par la suite séparé et dévié en deux faisceaux lumineux secondaires par des moyens de séparation et déviation. Lesdits moyens de séparation et déviation pourront par exemple être constitués d'un prisme destiné à séparer le faisceau lumineux en deux faisceaux lumineux secondaires et d'une combinaison de miroirs et/ou de lentilles destinée à modifier la trajectoire desdits faisceaux lumineux secondaires.

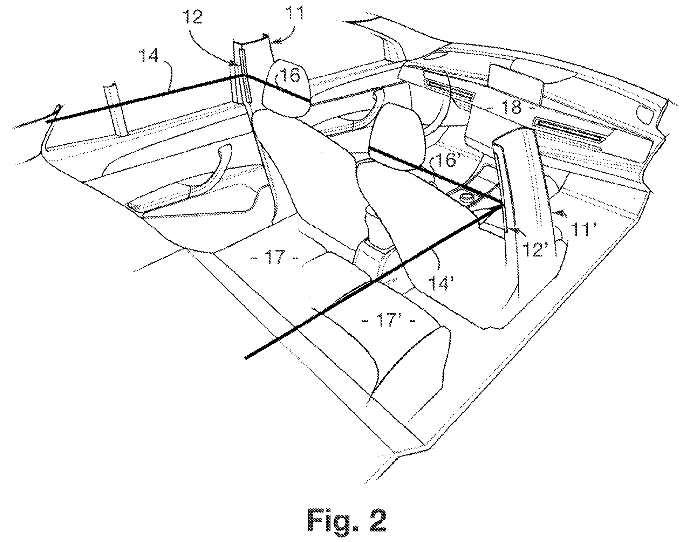

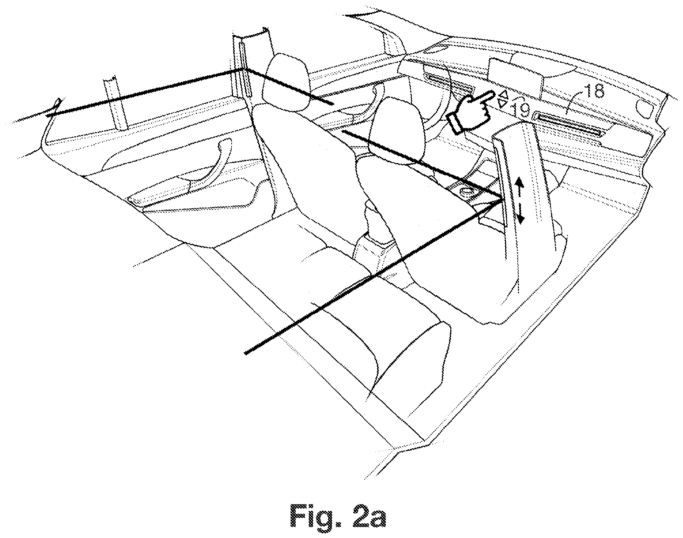

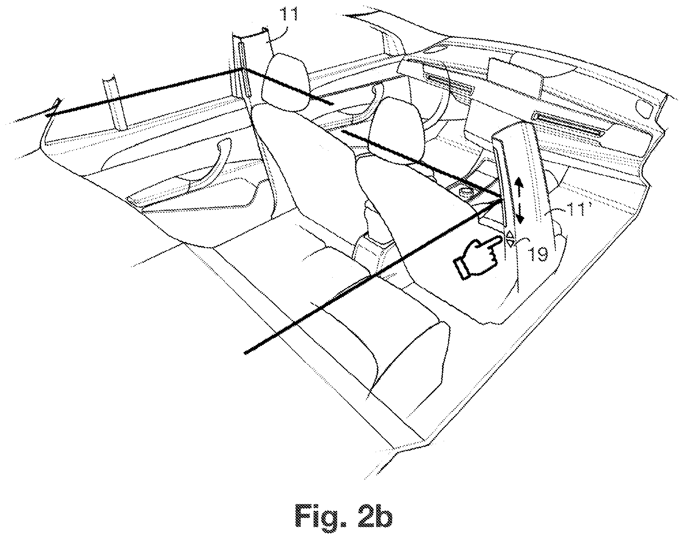

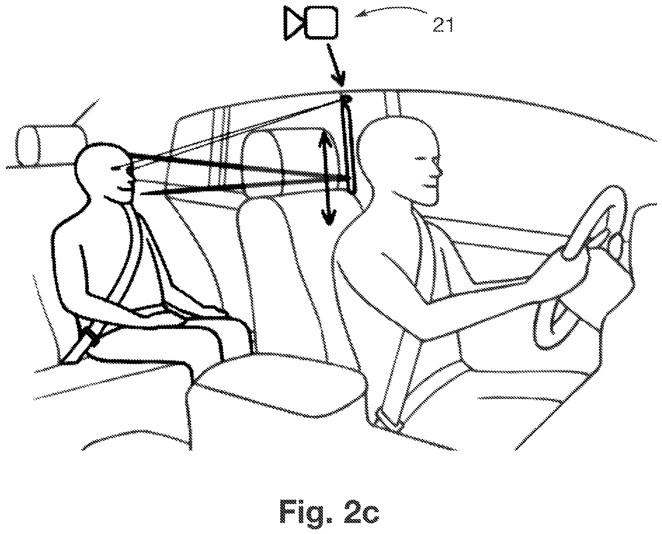

La ou les sources lumineuses pourront avantageusement se déplacer le long de chacune des colonnes d'éclairage 12, 12' de manière à modifier la hauteur des lignes d'horizon artificiel 14, 16 et 14', 16' par rapport à un plan fixe horizontal. Ainsi, et comme représenté sur la fig. 2, la position de la ou des sources lumineuses le long de la première colonne d'éclairage 12 pourra par exemple être plus élevée que la position de la ou des sources lumineuses le long de la deuxième colonne d'éclairage 12'. Cette configuration est particulièrement adaptée dans le cas où la personne assise dans le siège arrière gauche 17 est plus grande que la personne assise dans le siège arrière droit 17'. Cette modification de la position de la ou des sources lumineuses le long de la colonne d'éclairage 12, 12' pourra se faire à l'aide de moyens de déplacement pilotés par l'unité de contrôle et en réponse à une commande saisie manuellement par l'un des occupants du véhicule au moyen d'une interface de commande 19, pouvant être intégrée par exemple dans le tableau de bord 18, comme illustré sur la fig. 2a, ou dans le ou les montants centraux 11, 11' du véhicule, comme illustré sur la fig. 2b. Une interface de commande utilisable à ce niveau pourra comprendre une surface externe fonctionnellement liée à des moyens de détection de type capacitif, lesdits moyens de détection étant aptes à détecter le contact d'un doigt sur ladite surface externe et à transmettre un signal correspondant à l'unité de contrôle. Dans une autre configuration possible, le déplacement de la ou des sources lumineuses le long d'une des colonnes d'éclairage 12, 12' pourra s'effectuer de manière automatique en réponse à un signal émis par un capteur configuré pour détecter au moins un paramètre physique, en particulier la taille ou la position des yeux, de la personne assise la plus proche de la colonne d'éclairage. Le capteur pourra par exemple être une caméra 21, comme représenté sur la fig. 2c, un capteur ultrason, un capteur radiofréquence ou un capteur de mesure du poids intégré dans l'un des sièges du véhicule.

En référence à la fig. 7, il est représenté un habitacle d'un véhicule selon un deuxième mode de réalisation de l'invention. Dans ce mode de réalisation, le dispositif anti-cinétose comprend au moins trois colonnes lumineuses orientées verticalement, respectivement une première colonne lumineuse 12 qui est supportée par un montant central 11 du véhicule et qui est disposée du côté gauche par rapport au champ de vision d'un passager assis à l'arrière du véhicule, une deuxième colonne lumineuse 12' qui est supportée par un autre montant central 11' du véhicule et qui est disposée du côté droit par rapport au champ de vision d'un passager assis à l'arrière du véhicule, et une troisième colonne lumineuse 12" qui est supportée par un montant latéral 11" faisant partie d'une vitre latérale arrière ou d'un panneau de porte arrière 13 et du côté gauche par rapport au champ de vision d'un passager assis à l'arrière du véhicule. Chaque colonne lumineuse 12, 12', 12" est formée d'une pluralité de points lumineux alignés dans le sens vertical, chacun des points lumineux pouvant émettre une lumière dans un état activé et ne pas émettre de lumière dans un état désactivé. Ainsi, une première ligne d'horizon artificiel 14 est formée par la droite virtuelle passant par les points lumineux activés les plus hauts 17 et 17" sur les première et troisième colonnes lumineuses 12, 12" respectivement, et une deuxième ligne d'horizon artificiel 16 est formée par la droite virtuelle passant par les points lumineux activés les plus hauts 17 et 17' sur les première et deuxième colonnes lumineuses 12, 12' respectivement. Dans cette configuration, les première et deuxième lignes d'horizon artificiel 14, 16 sont perpendiculaires ou sensiblement perpendiculaires l'une à l'autre. Dans une variante avantageuse de l'invention, chacune des colonnes lumineuses 12, 12' et 12" pourra comprendre par exemple un réseau linéaire de diodes électroluminescentes alignées verticalement, chacune des diodes électroluminescentes formant l'un des points lumineux des colonnes lumineuses. Dans une autre configuration de l'invention, les points lumineux pourront être activé en partant du haut de chaque colonne lumineuse. Dans ce cas, la première ligne d'horizon artificiel 14 sera formée par la droite virtuelle passant par les points lumineux activés les plus bas sur les première et troisième colonnes lumineuses 12, 12" respectivement, et la deuxième ligne d'horizon artificiel 16 sera formée par la droite virtuelle passant par les points lumineux activés les plus bas sur les première et deuxième colonnes lumineuses 12, 12' respectivement. Par ailleurs, le véhicule 10 pourra avantageusement comprendre une quatrième colonne lumineuse (non représentée) qui sera supportée par un montant latéral faisant partie d'une vitre latérale arrière ou d'un panneau de porte arrière et du côté droit par rapport au champ de vision d'un passager assis à l'arrière du véhicule, ladite quatrième colonne lumineuse permettant de définir, en combinaison avec la deuxième colonne lumineuse 12', une troisième ligne d'horizon artificiel 14' sur le côté droit du véhicule.

En pilotant de manière adaptée les diodes électroluminescentes des première, deuxième et troisième colonnes lumineuses 12, 12' et 12", il est ainsi possible d'aligner les première et deuxième lignes d'horizon artificiel 14, 16 dans un plan horizontal A qui est toujours perpendiculaire au vecteur gravitation. Ainsi, une personne assise à côté une vitre latérale arrière ou d'un panneau de porte latérale arrière 13 et derrière le siège avant 15 et fixant lesdites lignes d'horizon artificiel 14, 16 aura les mêmes sensations visuelles que le conducteur regardant la route : il ne sera donc plus soumis au mal des transports. Comme dans le mode de réalisation de la fig. 1, le pilotage des diodes électroluminescentes est réalisé au moyen d'un accéléromètre triaxial et d'une unité de contrôle apte à recevoir les signaux d'accélération émis par l'accéléromètre. L'unité de contrôle pourra également contrôler la hauteur des points lumineux les plus hauts, ou les plus bas, en fonction d'un paramètre physique lié à la personne assise sur l'un des sièges arrières. En particulier, un capteur disposé à l'intérieur de l'habitacle pourra être configuré pour détecter au moins un paramètre physique, en particulier la taille ou la position des yeux, de la personne assise sur l'un des sièges arrière et transmettre l'information correspondante à l'unité de contrôle. En réponse à l'information transmise par le capteur, l'unité de contrôle est apte à modifier la hauteur du point lumineux le plus haut, ou le plus bas, de chacune des colonnes lumineuses de manière à l'aligner, par exemple avec la position des yeux de la personne assise à l'arrière, qui a été préalablement détectée par le capteur.

Les figs 7 à 11, 7a à 11a et 7b à 11b illustrent plusieurs conditions de conduite possibles et le fonctionnement correspondant du dispositif anti-cinétose de l'invention équipant le véhicule.

Ainsi, dans le cas où le véhicule 10 circule sur une route plane, comme représenté sur les figs 7a et 7b, il n'est soumis en principe à aucune accélération. Dans ce cas, le plan A défini par les lignes d'horizon artificiel 14, 16 est parallèle au plancher P du véhicule.

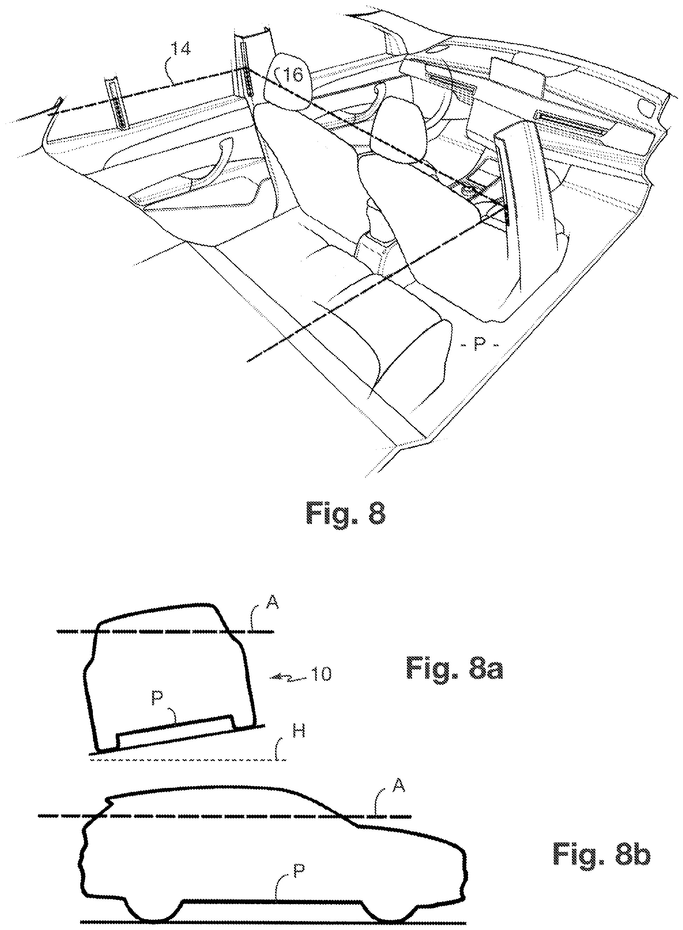

Dans le cas où le véhicule 10 circule sur une route inclinée sur la gauche par rapport à un plan horizontal fixe H, perpendiculaire au vecteur gravitation, comme représenté sur les figs 8a et 8b, il est soumis à une accélération selon l'axe Y. Cette accélération est détectée par l'accéléromètre triaxial, lequel envoie un signal d'accélération correspondant à l'unité de contrôle. En réponse à ce signal d'accélération, l'unité de contrôle commande les diodes électroluminescentes des première, deuxième et troisième colonnes lumineuses 12, 12', 12" de manière à aligner les première et deuxième lignes d'horizon artificiel 14, 16 avec le plan horizontal fixe H. Dans ce cas, le plan A défini par les lignes d'horizon artificiel est incliné par rapport au plancher P du véhicule au niveau de l'axe Y, comme représenté sur la fig. 8.

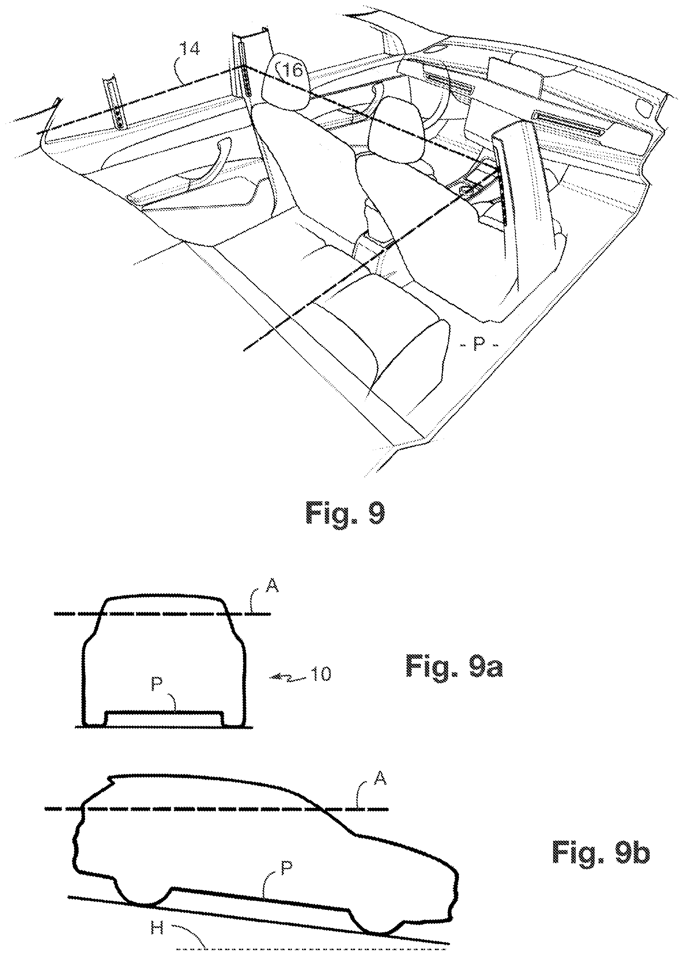

Dans le cas où le véhicule 10 circule sur une route inclinée vers le bas par rapport à un plan horizontal fixe H, perpendiculaire au vecteur gravitation, comme représenté sur les figs 9a et 9b, il est soumis à une accélération selon l'axe X. Cette accélération est détectée par l'accéléromètre triaxial, lequel envoie un signal d'accélération correspondant à l'unité de contrôle. En réponse à ce signal d'accélération, l'unité de contrôle commande les diodes électroluminescentes correspondantes des première, deuxième et troisième colonnes lumineuses 12, 12', 12" de manière à aligner les première et deuxième lignes d'horizon artificiel 14, 16 avec le plan horizontal fixe H. Dans ce cas, le plan A défini par les lignes d'horizon artificiel est incliné par rapport au plancher P du véhicule au niveau de l'axe X, comme représenté sur la fig. 9.

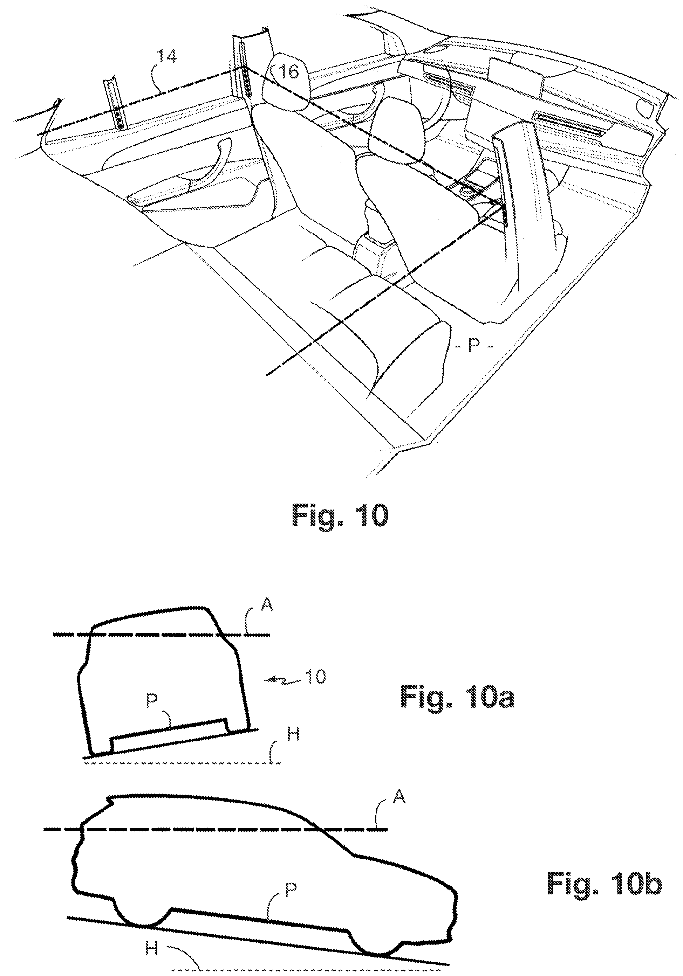

Dans le cas où le véhicule 10 circule sur une route inclinée sur la gauche et vers le bas par rapport à un plan horizontal fixe H, perpendiculaire au vecteur gravitation, comme représenté sur les figs 10a et 10b, il est soumis à une accélération selon l'axe X et selon l'axe Y. Cette accélération est détectée par l'accéléromètre triaxial, lequel envoie un signal d'accélération correspondant à l'unité de contrôle. En réponse à ce signal d'accélération, l'unité de contrôle commande les diodes électroluminescentes correspondantes des première, deuxième et troisième colonnes lumineuses 12, 12', 12" de manière à aligner les première et deuxième lignes d'horizon artificiel 14, 16 avec le plan horizontal fixe H. Dans ce cas, le plan A défini par les lignes d'horizon artificiel est incliné par rapport au plancher P du véhicule au niveau des axes X et Y, comme représenté sur la fig. 10.

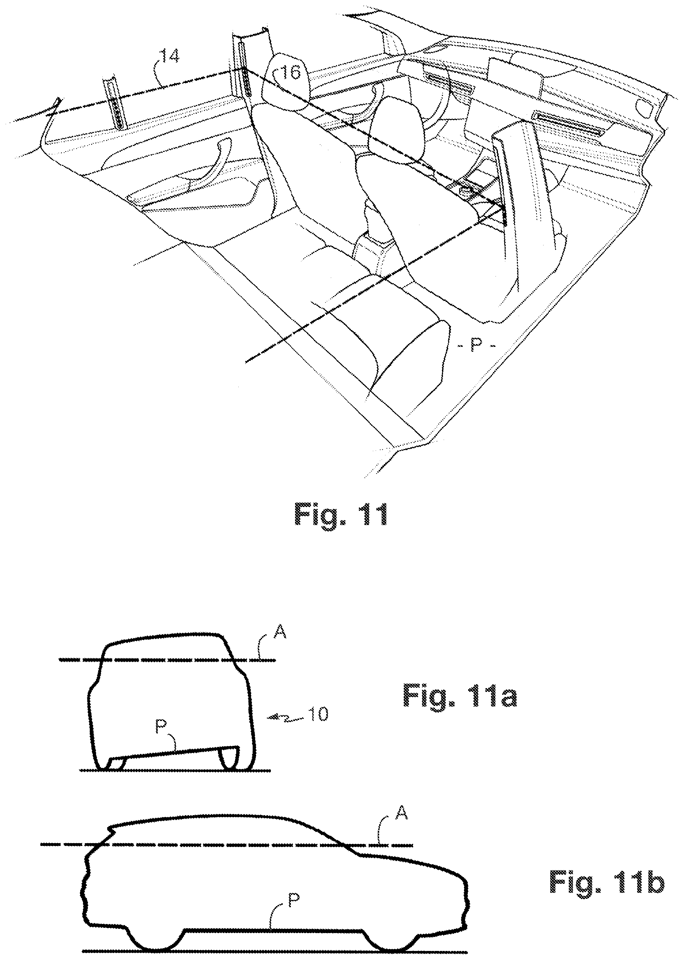

Dans le cas où le véhicule 10 circule sur une route plane et effectue un virage à gauche, comme représenté sur les figs 11a et 11b, il est soumis à une accélération selon l'axe Y. Cette accélération est détectée par l'accéléromètre triaxial, lequel envoie un signal d'accélération correspondant à l'unité de contrôle. En réponse à ce signal d'accélération, l'unité de contrôle commande les diodes électroluminescentes correspondantes des première, deuxième et troisième colonnes lumineuses 12, 12', 12" de manière à aligner les première et deuxième lignes d'horizon artificiel 14, 16 avec le plan horizontal fixe H. Dans ce cas, le plan A défini par les lignes d'horizon artificiel est incliné par rapport au plancher P du véhicule au niveau de l'axe Y, comme représenté sur la fig. 11.

Les deux modes de réalisations décrits précédemment ne sont évidemment pas limitatifs pour l'invention. D'autres variantes de réalisation pourront être envisagées à ce niveau.

Par ailleurs, l'invention a également pour objet de protéger un procédé d'affichage de repères lumineux destinés à lutter contre la cinétose. Ce procédé pourra notamment comprendre les étapes suivantes :
- détection des accélérations d'un véhicule automobile selon 3 axes, notamment au moyen d'un accéléromètre triaxial, et envoi de signaux correspondants à une unité de contrôle ;
- détection d'un paramètre physique lié à la personne assise dans le véhicule automobile et envoi d'un signal correspondant à l'unité de contrôle ;
- pilotage par l'unité de contrôle de moyens d'affichage de repères lumineux aptes à former au moins une première ligne d'horizon artificiel au niveau d'une première surface intérieure du véhicule automobile et au moins une deuxième ligne d'horizon artificiel au niveau d'une deuxième surface intérieure du véhicule automobile, les dites première et deuxième lignes d'horizon artificiel étant perpendiculaires ou sensiblement perpendiculaires l'une à l'autre, de telle sorte que les première et deuxième lignes d'horizon artificiel soient alignées dans un plan horizontal, perpendiculaire au vecteur gravitation, quelles que soient les accélérations du véhicule, la position dudit plan horizontal le long d'une direction parallèle au vecteur gravitation pouvant varier en fonction du paramètre physique détecté.

## Revendications

1. Dispositif anti-cinétose équipant un véhicule automobile (10), **caractérisé en ce que** le dispositif anti-cinétose comprend :
- un accéléromètre triaxial configuré pour détecter les accélérations du véhicule (10) selon 3 axes et à émettre un signal d'accélération correspondant ;
- des moyens d'affichage (12, 12', 12") de repères lumineux aptes à former au moins une première ligne d'horizon artificiel (14, 14') au niveau d'une première surface intérieure (13) du véhicule automobile (10) et au moins une deuxième ligne d'horizon artificiel (16, 16') au niveau d'une deuxième surface intérieure (15, 15') du véhicule automobile (10), les dites première et deuxième lignes d'horizon artificiel (14, 16 ; 14', 16') étant perpendiculaires ou sensiblement perpendiculaires l'une à l'autre ;
- une unité de contrôle apte à recevoir les signaux d'accélération émis par l'accéléromètre et à piloter lesdits moyens d'affichage (12, 12', 12") de telle sorte que les première et deuxième lignes d'horizon artificiel (14, 16 ; 14', 16') soient alignées dans un plan horizontal (A), perpendiculaire ou sensiblement perpendiculaire au vecteur gravitation, quelles que soient les accélérations du véhicule, la position dudit plan horizontal (A) le long d'une direction parallèle au vecteur gravitation pouvant varier en fonction d'un paramètre physique lié à la personne assise dans le véhicule automobile en étant positionnée juste à côté de la première surface intérieure (13) et juste en face de la deuxième surface intérieure (15, 15'),
dans lequel les moyens d'affichage (12, 12', 12") sont aptes à émettre au moins deux faisceaux lumineux de forme rectiligne, respectivement un premier faisceau lumineux projeté sur la première surface intérieure (13) et formant la première ligne d'horizon artificiel (14, 14'), et un deuxième faisceau lumineux projeté sur la deuxième surface intérieure (15, 15') et formant la deuxième ligne d'horizon artificiel (16, 16'), et dans lequel les moyens d'affichage (12, 12', 12") comprennent au moins une source lumineuse émettant un faisceau lumineux principal, et des moyens de séparation et de déviation dudit faisceau lumineux principal en deux faisceaux lumineux secondaires.

2. Dispositif selon la revendication 1, **caractérisé en ce que** le paramètre physique est la taille de la personne, en position assise dans le véhicule.

3. Dispositif selon la revendication 1 ou 2, **caractérisé en ce que** l'unité de contrôle est apte à modifier la position du plan horizontal (A) défini par les première et deuxième lignes d'horizon artificiel (14, 16 ; 14', 16') en réponse à une commande saisie manuellement par l'un des occupants du véhicule au moyen d'une interface de commande.

4. Dispositif selon la revendication 3, **caractérisé en ce que** l'interface de commande est intégrée dans le tableau de bord (18) du véhicule.

5. Dispositif selon la revendication 3, **caractérisé en ce que** l'interface de commande est intégrée dans un montant central (11, 11') du véhicule.

6. Dispositif selon la revendication 4 ou 5, **caractérisé en ce que** l'interface de commande comprend une surface externe fonctionnellement liée à des moyens de détection de type capacitif, lesdits moyens de détection étant aptes à détecter le contact d'un doigt sur ladite surface externe et à transmettre un signal correspondant à l'unité de contrôle.

7. Dispositif selon la revendication 1 ou 2, **caractérisé en ce que** l'unité de contrôle est apte à modifier de manière automatique la position du plan horizontal (A) défini par les première et deuxième lignes d'horizon artificiel (14, 16 ; 14', 16') en réponse à un signal émis par un capteur configuré pour détecter au moins un paramètre physique, en particulier la position des yeux, de la personne assise juste à côté de la première surface intérieure (13) et juste en face de la deuxième surface intérieure (15, 15').

8. Dispositif selon la revendication 7, **caractérisé en ce que** le capteur est choisi parmi une caméra, un capteur ultrason, un capteur radiofréquence et un capteur de mesure du poids positionné dans l'un des sièges du véhicule.

9. Dispositif selon l'une des revendications précédentes, **caractérisé en ce que** les moyens de séparation et de déviation comprennent un prisme destiné à séparer le faisceau lumineux en deux faisceaux lumineux secondaires et une combinaison de miroirs et/ou de lentilles destinée à modifier la trajectoire desdits faisceaux lumineux secondaires.

10. Dispositif selon l'une des revendications précédentes, **caractérisé en ce que** la source lumineuse est un laser.

11. Véhicule automobile (10) équipé d'un dispositif anti-cinétose selon l'une des revendications précédentes.

12. Véhicule automobile (10) selon la revendication 11, **caractérisé en ce qu'**il comprend au moins un montant central (11, 11'), ledit montant central supportant les moyens d'affichage (12, 12'), lesdits moyens d'affichage étant configurés pour projeter le premier faisceau lumineux sur une vitre latérale arrière ou un panneau (13) de porte arrière du véhicule et pour projeter le deuxième faisceau lumineux sur une surface intérieure (15, 15') de l'habitacle disposée de manière sensiblement perpendiculaire à ladite vitre ou audit panneau (13) de porte, par exemple le dossier d'un des sièges avant du véhicule.

13. Véhicule (10) selon la revendication 12, **caractérisé en ce que** les moyens d'affichage (12, 12') sont déplaçables le long du montant central (11, 11') de manière à permettre un réglage de la hauteur des lignes d'horizon artificiel (14, 16 ; 14', 16') par rapport à un plan fixe horizontal (H).

14. Procédé d'affichage de repères lumineux destinés à lutter contre la cinétose, comprenant les étapes suivantes :
- détection des accélérations d'un véhicule automobile (10) selon 3 axes et envoi de signaux correspondants à une unité de contrôle ;
- détection d'un paramètre physique lié à la personne assise dans le véhicule automobile et envoi d'un signal correspondant à l'unité de contrôle ;
- pilotage par l'unité de contrôle de moyens d'affichage (12, 12', 12") de repères lumineux aptes à former au moins une première ligne d'horizon artificiel (14, 14') au niveau d'une première surface intérieure (13) du véhicule automobile et au moins une deuxième ligne d'horizon artificiel (16, 16') au niveau d'une deuxième surface intérieure (15, 15') du véhicule automobile, les dites première et deuxième lignes d'horizon artificiel (14, 16 ; 14', 16') étant perpendiculaires ou sensiblement perpendiculaires l'une à l'autre, de telle sorte que les première et deuxième lignes d'horizon artificiel (14, 16 ; 14', 16') soient alignées dans un plan horizontal (A), perpendiculaire au vecteur gravitation, quelles que soient les accélérations du véhicule, la position dudit plan horizontal (A) le long d'une direction parallèle au vecteur gravitation pouvant varier en fonction du paramètre physique détecté, dans lequel les moyens d'affichage (12, 12', 12") sont aptes à émettre au moins deux faisceaux lumineux de forme rectiligne, respectivement un premier faisceau lumineux projeté sur la première surface intérieure (13) et formant la première ligne d'horizon artificiel (14, 14'), et un deuxième faisceau lumineux projeté sur la deuxième surface intérieure (15, 15') et formant la deuxième ligne d'horizon artificiel (16, 16'), et dans lequel les moyens d'affichage (12, 12', 12") comprennent au moins une source lumineuse émettant un faisceau lumineux principal, et des moyens de séparation et de déviation dudit faisceau lumineux principal en deux faisceaux lumineux secondaires.

## Patentansprüche

1. Kinetose-Schutzeinrichtung in einem Kraftfahrzeug (10), **dadurch gekennzeichnet, dass** die Kinetose-Schutzeinrichtung Folgendes umfasst:
- einen dreiachsigen Beschleunigungsmesser, der so eingerichtet ist, dass er die Beschleunigungen des Fahrzeugs (10) nach 3 Achsen erfasst und ein entsprechendes Beschleunigungssignal ausgibt;
- Anzeigemittel (12, 12', 12") für Lichtmarkierungen, die geeignet sind, mindestens eine erste künstliche Horizontlinie (14, 14') auf Höhe einer ersten Innenfläche (13) des Kraftfahrzeugs (10) und mindestens eine zweite künstliche Horizontlinie (16, 16') auf Höhe einer zweiten Innenfläche (15, 15') des Kraftfahrzeugs (10) zu bilden, wobei die erste und zweite künstliche Horizontlinie (14, 16; 14' 16') senkrecht oder im Wesentlichen senkrecht zueinander stehen;
- eine Steuereinheit, die in der Lage ist, die vom Beschleunigungsmesser gesendeten Beschleunigungssignale zu empfangen und die Anzeigemittel (12, 12', 12") so zu steuern, dass die erste und zweite künstliche Horizontlinie (14, 16; 14', 16') in einer horizontalen Ebene (A), senkrecht oder im Wesentlichen senkrecht zum Gravitationsvektor ausgerichtet sind, unabhängig von den Beschleunigungen des Fahrzeugs, wobei die Position der horizontalen Ebene (A) entlang einer Richtung parallel zum Gravitationsvektor variieren kann, je nach einem physikalischen Parameter, der mit der Person im Kraftfahrzeug verbunden ist, indem sie direkt neben der ersten Innenfläche (13) und direkt gegenüber der zweiten Innenfläche (15, 15') positioniert ist,
wobei die Anzeigemittel (12, 12', 12") in der Lage sind, mindestens zwei geradlinig geformte Lichtstrahlen auszusenden, jeweils einen ersten Lichtstrahl, der auf die erste Innenfläche (13) projiziert wird und die erste künstliche Horizontlinie bildet (14, 14'), und ein zweiter Lichtstrahl, der auf die zweite Innenfläche (15, 15') projiziert wird und die zweite künstliche Horizontlinie (16, 16') bildet, und in dem die Anzeigemittel (12, 12', 12") mindestens eine Lichtquelle umfassen, die einen Hauptlichtstrahl aussendet, und Mittel zur Trennung und Umleitung des Hauptlichtstrahls in zwei sekundäre Lichtstrahlen.

2. Vorrichtung nach Anspruch 1, **dadurch gekennzeichnet, dass** der physikalische Parameter die Größe der Person in sitzender Position im Fahrzeug ist.

3. Vorrichtung nach Anspruch 1 oder 2, **dadurch gekennzeichnet, dass** die Steuereinheit in der Lage ist, die Position der horizontalen Ebene (A), die durch die erste und zweite künstliche Horizontlinie (14, 16; 14', 16') festgelegt ist, als Reaktion auf einen manuell von einem der Fahrzeuginsassen mittels einer Bedienschnittstelle eingegebenen Befehl zu ändern.

4. Vorrichtung nach Anspruch 3, **dadurch gekennzeichnet, dass** die Bedienschnittstelle in das Armaturenbrett (18) des Fahrzeugs integriert ist.

5. Vorrichtung nach Anspruch 3, **dadurch gekennzeichnet, dass** die Bedienschnittstelle in eine Mittelsäule (11, 11') des Fahrzeugs integriert ist.

6. Vorrichtung nach Anspruch 4 oder 5, **dadurch gekennzeichnet, dass** die Steuerschnittstelle eine äußere Oberfläche umfasst, die funktionell mit kapazitiven Detektionsmitteln verbunden ist, wobei diese Detektionsmittel in der Lage sind, den Kontakt eines Fingers auf der äußeren Oberfläche zu erkennen und ein entsprechendes Signal an die Steuereinheit zu übertragen.

7. Vorrichtung nach Anspruch 1 oder 2, **dadurch gekennzeichnet, dass** die Steuereinheit in der Lage ist, die Position der horizontalen Ebene (A), die durch die erste und zweite künstliche Horizontlinie (14, 16; 14', 16') als Reaktion auf ein Signal, das von einem Sensor gesendet wird, der so eingerichtet ist, dass er mindestens einen physikalischen Parameter, insbesondere die Augenposition, der sitzenden Person unmittelbar neben der ersten Innenfläche (13) und unmittelbar gegenüber der zweiten Innenfläche (15, 15') erkennt.

8. Vorrichtung nach Anspruch 7, **dadurch gekennzeichnet, dass** der Sensor aus einer Kamera, einem Ultraschallsensor, einem Funkfrequenzsensor und einem in einem der Fahrzeugsitze positionierten Gewichtsmesssensor ausgewählt ist.

9. Vorrichtung nach einem der vorhergehenden Ansprüche, **dadurch gekennzeichnet, dass** die Mittel zur Trennung und Umleitung ein Prisma zur Trennung des Lichtstrahls in zwei sekundäre Lichtstrahlen und eine Kombination von Spiegeln und/oder Linsen zur Änderung der Bahn der sekundären Lichtstrahlen umfassen.

10. Vorrichtung nach einem der vorhergehenden Ansprüche, **dadurch gekennzeichnet, dass** die Lichtquelle ein Laser ist.

11. Kraftfahrzeug (10) mit einer Kinetose-Schutzeinrichtung nach einem der vorhergehenden Ansprüche.

12. Kraftfahrzeug (10) nach Anspruch 11, **dadurch gekennzeichnet, dass** es mindestens eine Mittelsäule (11, 11') umfasst, wobei die Mittelsäule die Anzeigemittel (12, 12') trägt, wobei die Anzeigemittel so eingerichtet sind, dass sie den ersten Lichtstrahl auf eine hintere Seitenscheibe oder eine hintere Türplatte (13) des Fahrzeugs und den zweiten Lichtstrahl auf eine Innenfläche (15, 15') des Fahrzeuginnenraums projizieren, der im Wesentlichen rechtwinklig zu dieser Scheibe oder dieser Türplatte (13) angeordnet ist, beispielsweise die Rückenlehne eines der Vordersitze des Fahrzeugs.

13. Fahrzeug (10) nach Anspruch 12, **dadurch gekennzeichnet, dass** die Anzeigemittel (12, 12') entlang der Mittelsäule (11, 11') verschiebbar sind, um eine Höheneinstellung der künstlichen Horizontlinien (14, 16; 14', 16') in Bezug auf eine horizontale Festebene (H) zu ermöglichen.

14. Verfahren zur Anzeige von Lichtmarkierungen zur Bekämpfung der Kinetose, umfassend die folgenden Schritte:
- Erkennen der Beschleunigungen eines Kraftfahrzeugs (10) nach 3 Achsen und Senden entsprechender Signale an eine Steuereinheit;
- Erkennung eines physikalischen Parameters, der mit der Person im Kraftfahrzeug zusammenhängt, und Senden eines entsprechenden Signals an die Steuereinheit;
- Steuerung durch die Anzeigemittel-Steuereinheit (12, 12', 12") von Lichtmarkierungen, die geeignet sind, mindestens eine erste künstliche Horizontlinie (14, 14') auf Höhe einer ersten Innenfläche (13) des Kraftfahrzeugs und mindestens eine zweite künstliche Horizontlinie (16, 16') auf Höhe einer zweiten Innenfläche (15, 15') des Kraftfahrzeugs zu bilden, die erste und zweite künstliche Horizontlinie (14, 16; 14', 16') rechtwinklig oder im Wesentlichen rechtwinklig zueinander stehen, so dass die erste und zweite künstliche Horizontlinie (14, 16; 14', 16') in einer horizontalen Ebene (A) senkrecht zum Gravitationsvektor ausgerichtet sein, unabhängig von den Beschleunigungen des Fahrzeugs, die Position der horizontalen Ebene (A) entlang einer Richtung parallel zum Gravitationsvektor, die je nach dem erkannten physikalischen Parameter variieren kann, wobei die Anzeigemittel (12, 12', 12") in der Lage sind, mindestens zwei geradlinig geformte Lichtstrahlen auszusenden, jeweils einen ersten Lichtstrahl, der auf die erste Innenfläche (13) projiziert wird und die erste künstliche Horizontlinie (14, 14') bildet, und einen zweiten Lichtstrahl, der auf die zweite Innenfläche (15, 15') projiziert wird und die zweite künstliche Horizontlinie (16,16') bildet, und wobei die Anzeigemittel (12, 12', 12") mindestens eine Lichtquelle umfassen, die einen Hauptlichtstrahl aussendet, und Mittel zur Trennung und Umleitung des Hauptlichtstrahls in zwei sekundäre Lichtstrahlen.

## Claims

1. An anti-motion sickness device fitted to a motor vehicle (10), **characterized in that** the anti-motion sickness device comprises:
- a triaxial accelerometer configured to detect the accelerations of the vehicle (10) along 3 axes and to emit a corresponding acceleration signal;
- means (12, 12', 12") for displaying light markers capable of forming at least one first artificial horizon line (14, 14') at a first inner surface (13) of the motor vehicle (10) and at least one second artificial horizon line (16, 16') at a second inner surface (15, 15') of the motor vehicle (10), said first and second artificial horizon lines (14, 16; 14', 16') being perpendicular or substantially perpendicular to each other;
- a control unit capable of receiving the acceleration signals emitted by the accelerometer and of driving said display means (12, 12', 12") such that the first and second artificial horizon lines (14, 16; 14', 16') are aligned in a horizontal plane (A), perpendicular or substantially perpendicular to the gravity vector, whatever the accelerations of the vehicle, the position of said horizontal plane (A) along a direction parallel to the gravity vector being able to vary as a function of a physical parameter linked to the person seated in the motor vehicle while being positioned just next to the first inner surface (13) and just in front of the second inner surface (15, 15),
wherein the display means (12, 12', 12") are capable of emitting at least two rectilinear light beams, respectively a first light beam projected onto the first inner surface (13) and forming the first artificial horizon line (14, 14'), and a second light beam projected onto the second inner surface (15, 15') and forming the second artificial horizon line (16, 16'), and wherein the display means (12, 12', 12") comprise at least one light source emitting a main light beam, and means for separating and deflecting said main light beam into two secondary light beams.

2. The device according to claim 1, **characterized in that** the physical parameter is the size of the person, in a seated position in the vehicle.

3. The device according to claim 1 or 2, **characterized in that** the control unit is capable of modifying the position of the horizontal plane (A) defined by the first and second artificial horizon lines (14, 16; 14', 16') in response to a command entered manually by one of the occupants of the vehicle by means of a command interface.

4. The device according to claim 3, **characterized in that** the command interface is integrated into the dashboard (18) of the vehicle.

5. The device according to claim 3, **characterized in that** the command interface is integrated into a central pillar (11, 11') of the vehicle.

6. The device according to claim 4 or 5, **characterized in that** the command interface comprises an external surface functionally linked to capacitive-type detection means, said detection means being capable of detecting the contact of a finger on said external surface and of transmitting a corresponding signal to the control unit.

7. The device according to claim 1 or 2, **characterized in that** the control unit is capable of automatically modifying the position of the horizontal plane (A) defined by the first and second artificial horizon lines (14, 16; 14', 16') in response to a signal emitted by a sensor configured to detect at least one physical parameter, in particular the position of the eyes, of the person seated just next to the first inner surface (13) and just in front of the second inner surface (15, 15').

8. The device according to claim 7, **characterized in that** the sensor is chosen from a camera, an ultrasonic sensor, a radiofrequency sensor and a weight measurement sensor positioned in one of the seats of the vehicle.

9. The device according to any of the preceding claims, **characterized in that** the separation and deflection means comprise a prism intended to separate the light beam into two secondary light beams and a combination of mirrors and/or lenses intended to modify the trajectory of said secondary light beams.

10. The device according to any of the preceding claims, **characterized in that** the light source is a laser.

11. A motor vehicle (10) fitted with an anti-motion sickness device according to any of the preceding claims.

12. The motor vehicle (10) according to claim 11, **characterized in that** it comprises at least one central pillar (11, 11'), said central pillar supporting the display means (12, 12'), said display means being configured to project the first light beam onto a rear side window or a rear door panel (13) of the vehicle and to project the second light beam onto an inner surface (15, 15') of the passenger compartment disposed substantially perpendicular to said window or to said door panel (13), for example the backrest of one of the front seats of the vehicle.

13. The vehicle (10) according to claim 12, **characterized in that** the display means (12, 12') are movable along the central pillar (11, 11') so as to allow adjustment of the height of the artificial horizon lines (14, 16; 14', 16') relative to a fixed horizontal plane (H).

14. A method for displaying light markers intended to combat motion sickness, comprising the following steps:
- detecting the accelerations of a motor vehicle (10) along 3 axes and sending corresponding signals to a control unit;
- detecting a physical parameter linked to the person seated in the motor vehicle and sending a corresponding signal to the control unit;
- driving, by the control unit, means (12, 12', 12") for displaying light markers capable of forming at least one first artificial horizon line (14, 14') at a first inner surface (13) of the motor vehicle and at least one second artificial horizon line (16, 16') at a second inner surface (15, 15') of the motor vehicle, said first and second artificial horizon lines (14, 16; 14', 16') being perpendicular or substantially perpendicular to each other, such that the first and second artificial horizon lines (14, 16; 14', 16') are aligned in a horizontal plane (A), perpendicular to the gravity vector, whatever the accelerations of the vehicle, the position of said horizontal plane (A) along a direction parallel to the gravity vector being able to vary as a function of the detected physical parameter, wherein the display means (12, 12', 12") are capable of emitting at least two rectilinear light beams, respectively a first light beam projected onto the first inner surface (13) and forming the first artificial horizon line (14, 14'), and a second light beam projected onto the second inner surface (15, 15') and forming the second artificial horizon line (16, 16'), and wherein the display means (12, 12', 12") comprise at least one light source emitting a main light beam, and means for separating and deflecting said main light beam into two secondary light beams.
